# EUROPÄISCHE PATENTSCHRIFT

(11) **EP 3 889 977 B1**
(45) Veröffentlichungstag und Bekanntmachung des Hinweises auf die Patenterteilung: **20.09.2023**
(21) Anmeldenummer: 20212432.7
(22) Anmeldetag: 08.12.2020
(51) Int. Cl.: H01F 7/20, H01F 5/04, B25H 1/00, H01F 7/06, H01F 27/02

(54) **MAGNETFUSS**
MAGNETIC BASE
PIED MAGNÉTIQUE

(30) Priorität: 01.04.2020 DE 202020101776 U
(43) Veröffentlichungstag der Anmeldung: 06.10.2021
(73) Patentinhaber: C. & E. Fein GmbH, 73529 Schwäbisch Gmünd-Bargau (DE)
(72) Erfinder: Denzel, Sergej, 73529 Schwäbisch Gmünd-Bargau (DE); Scherrenbacher, Stefan, 73529 Schwäbisch Gmünd-Bargau (DE)
(74) Vertreter: Wallinger, Michael

(56) Entgegenhaltungen:
- DE-A1- 1 552 211
- DE-A1- 2 053 493
- DE-A1-102016 221 677
- US-A- 4 122 425
- US-A1- 2005 225 418

## Beschreibung

Die Erfindung betrifft einen Magnetfuß für eine Elektrowerkzeugmaschine, insbesondere für eine Magnetkernbohrmaschine, mit einem Grundkörper, in dem in einem Aufnahmeraum mindestens eine einen Elektromagneten bildende erste Magnetspule aufgenommen ist, deren Spulenwicklung auf einem Spulenträger gewickelt ist und deren Magnetkraft zwischen einer maximalen resultierenden Haltekraft und einer minimalen resultierenden Haltekraft schaltbar ist, wobei die Spulenwicklung der Magnetspule zwei Endabschnitte aufweist, die jeweils mit einem Anschlusskabel verbunden sind, die zur elektrischen Kontaktierung der Magnetspule mit der Elektrowerkzeugmaschine dienen, und wobei der Grundkörper eine erste Seite, die mit der Elektrowerkzeugmaschine koppelbar ist, und eine gegenüberliegende zweite Seite aufweist, die auf ein zu bearbeitendes Werkstück aufsetzbar ist.

Derartige Magnetfüße sind aus dem Stand der Technik bereits seit langem bekannt und werden üblicherweise dafür verwendet, Elektrowerkzeugmaschinen, wie Magnetkernbohrmaschinen, mittels Magnethaltkraft auf dem zu bearbeitenden Werkstück zu befestigen. Hierbei hat es sich jedoch als nachteilig erwiesen, dass die Anschlusskabel mit den Endabschnitten der Spulenwicklung üblicherweise verlötet werden. Dieser Arbeitsprozess ist jedoch recht kompliziert und insofern nachteilig, als dass sich dieser als nicht prozesssicher herausgestellt hat. So müssen bei diesem Prozess zunächst die Endabschnitte der Spulenwicklungen von der Isolierung befreit werden, die auf dem Wicklungsdraht aufgebracht ist, wobei sichergestellt werden muss, dass stets die gleiche Länge abisoliert wird. Danach werden die jeweiligen Enden miteinander verlötet und die Lötstelle mit einem sogenannten Schrumpfschlauch überdeckt und gesichert. Aber auch die Verlötung selbst ist mit dem Problem verbunden, dass diese in der Regel händisch durchgeführt wird und damit nur begrenzt reproduzierbar durchführbar ist. Zudem ist die fertige Lötverbindung nur beschränkt mechanisch belastbar, nicht zuletzt aufgrund des geringen Durchmessers des Wicklungsdrahts der Magnetspule.

Das Dokument DE 15 52 211 A1 offenbart einen Magnetfuß nach den Oberbegriff von Anspruch 1. Die Dokumente DE 10 2016 221677 A1, US 4 122 425 A, DE 20 53 493 A1, US 2005/225418 A1 offenbaren verschiedenen Anordnungen von Anschlusshilfen für Spulen.

Der vorliegenden Erfindung liegt daher die Aufgabe zugrunde, einen verbesserten Magnetfuß bereitzustellen, der einfacher und prozesssicherer herstellbar ist. Zudem ist es Aufgabe der Erfindung eine verbesserte Elektrowerkzeugmaschine bereitzustellen

Der den Magnetfuß betreffende Teil der Aufgabe wird gemäß der Erfindung bei einem Magnetfuß der eingangs genannten Art dadurch gelöst, dass die Endabschnitte der Spulenwicklung jeweils durch eine mechanische Anschlusshilfe mit den Anschlusskabeln verbunden sind.

Durch die mechanische Anschlusshilfe wird erreicht, dass die Endabschnitte der Spulenwicklungen und die Anschlusskabel sicher und vor allem reproduzierbar miteinander verbunden werden können, wodurch die vorgenannten Nachteile reduziert werden und damit gleichzeitig die Prozesssicherheit verbessert wird.

In diesem Zusammenhang hat es sich dann bewährt, wenn die Anschlusshilfe ausgewählt ist aus einer Gruppe, die Crimpverbinder, insbesondere Spliceverbinder und Aderendhülsen, sowie Parallelverbinder umfasst. Beim Crimpen wird ein häufig aus Metall bestehendes Verbindungselement verwendet, mit dem zwei Komponenten durch plastische Verformung des Verbindungselements miteinander verbunden werden, beispielsweise durch Bördeln, Quetschen, Kräuseln oder Falten. Wenn dieses Verbindungselement als ein Spliceverbinder ausgebildet ist, so ist das Material, aus dem der Spliceverbinder gebildet ist, als Spliceband ausgeführt und auf einer Rolle gelagert. In einer Spliceverbindungsmaschine oder auch in einem vorgelagerten Arbeitsschritt wird dann eine vorgefertigte Länge des Splicebandes abgetrennt. Auf diesen Sliceverbinder wird nun einer der Endabschnitte der Spulenwicklungen und eines der Anschlusskabel aufgelegt und danach der Spliceverbinder plastisch verformt. Diese plastische Verformung erfolgt durch die Spliceverbindungsmaschine. Dieser Prozess kann natürlich auch manuell beispielsweise mittels einer Zange erfolgen. Beim Einsatz von Aderendhülsen ist die Vorgehensweise ähnlich. In die Aderendhülse können jeweils einer der Endabschnitte der Spulenwicklung und eines der Anschlusskabel eingeführt werden. Beispielsweise durch eine Zange, die üblicherweise speziell zum Komprimieren der Aderendhülsen ausgelegt ist, lässt sich diese Aderendhülse zumindest lokal deformieren und komprimieren. Durch diese Arten der Verbindung werden die beiden in dem Crimpverbinder befindlichen Kabel miteinander zu einer Einheit verbunden. Zudem kann durch die Verwendung derartiger Crimpverbinder auf die Abisolierung der Endabschnitte der Spulenwicklung verzichtet werden, da durch die Komprimierung des Crimpverbinders die auf dem Wicklungsdraht befindliche, isolierende Lackschicht lokal durchgeschnitten wird. Hierdurch ist dann der Wicklungsdraht über den Crimpverbinder mit dem Anschlusskabel elektrisch leitend verbunden. Alternativ können auch Parallelverbinder verwendet werden, die einen zylindrischen Rohrabschnitt aufweisen, in dem die Kabel aufgenommen werden. Dieser Rohrabschnitt wird dann ebenfalls mechanisch deformiert, um die beiden Kabel miteinander sicher zu verbinden und elektrisch zu kontaktieren.

In diesem Zusammenhang hat es sich dann auch bewährt, wenn das Anschlusskabel und der Endabschnitt der Spulenwicklung eine gemeinsame Einschubrichtung in die Anschlusshilfe aufweisen. Dies bewirkt eine sehr einfache Arbeitsvorbereitung, da das Anschlusskabel und der Endabschnitt lediglich zusammen von der gleichen Richtung her in die Anschlussvorrichtung eingeschoben werden müssen.

Um die Anschlusshilfe sicher zu lagern hat es sich gemäß der Erfindung als vorteilhaft erwiesen, wenn dem Spulenträger eine Aufnahme für die Anschlusshilfen zugeordnet ist. In diese Aufnahmen können die Anschlusshilfen eingesetzt werden, nachdem die Endabschnitte der Spulenwicklungen und die Anschlusskabel durch die Anschlusshilfe sicher zu einer Einheit miteinander verbunden wurden. Im Rahmen der Erfindung ist es hierbei auch vorgesehen, dass die Anschlusshilfen kraft- und/oder formschlüssig in der Aufnahme aufgenommen sind. Hierzu kann beispielsweise eine Rastverbindung verwendet werden.

Als besonders vorteilhaft hat es sich auch gezeigt, wenn die Aufnahme zwei gegeneinander elektrisch isolierte Aufnahmekompartimente umfasst. Durch die elektrische Isolierung wird sichergestellt, dass ein Kurzschluss zwischen den Anschlusshilfen im montierten Zustand verhindert wird. Zudem wird hierdurch noch eine Zusatzisolierung bereitgestellt, was sich positiv für die Verwendung des erfindungsgemäßen Magnetfußes auswirkt. Hierdurch wird dann sichergestellt, dass die notwendigen Luft- und Kriechstrecken eingehalten werden können. Dies wird noch dadurch weiter begünstigt, wenn die Länge der Anschlusshilfen kürzer ist als die Einsetztiefe der Aufnahme. Auch hierdurch wird sichergestellt, dass die Anschlusshilfe vollständig in der Aufnahme aufgenommen ist, so dass die Gefahr eines Kurzschlusses durch ein Überstehen der Anschlusshilfe aus der Aufnahme reduziert wird.

Gemäß der Erfindung wird das Einsetzen der Anschlusshilfe noch dadurch erleichtert, wenn sich die Aufnahme in Richtung der ersten Seite des Grundkörpers erstreckt. Hierdurch kann bei der Montage die Anschlusshilfe einfach in die Aufnahme eingesteckt werden und das Anschlusskabel einfach zu der Handwerkzeugmaschine geführt werden.

In diesem Zusammenhang hat es sich auch bewährt, wenn an der Außenseite der Aufnahme eine Drahtführung ausgebildet ist. Somit kann sichergestellt werden, dass die Endabschnitte der Spulenwicklung von der eigentlichen Magnetspule zu der Aufnahme geführt verlaufen, wenn die Anschlusshilfe in die Aufnahme eingesetzt wird. In diesem Zusammenhang hat es sich dann auch als vorteilhaft erwiesen, wenn die Drahtführung einen ersten Abschnitt, der sich über eine Seitenfläche der Aufnahme erstreckt, und einen zweiten Abschnitt umfasst, der an einer Stirnfläche der Aufnahme ausgebildet ist.

Als besonders günstig hat es sich auch erwiesen, wenn der Spulenträger eine erste Deckscheibe, die der ersten Seite des Grundkörpers zugewandt ist, und eine zweite Deckscheibe aufweist, die der zweiten Seite des Grundkörpers zugewandt ist, wobei die erste Deckscheibe und die zweite Deckscheibe über einen zylindrischen Abschnitt miteinander verbunden sind, auf dem die Spulenwicklung der Magnetspule gewickelt ist. Durch diesen Aufbau des Spulenträgers kann sichergestellt werden, dass die Magnetspule sicher auf dem zylindrischen Abschnitt gewickelt werden kann. Hierbei hat es sich dann weiterhin bewährt, wenn die Aufnahme der ersten Deckscheibe zugeordnet ist, die benachbart zu der ersten Seite des Grundkörpers angeordnet ist. Die erste und die zweite Deckscheibe verlaufen dabei parallel zu der ersten Seite des Grundkörpers.

Die Isolation der in dem Aufnahmeraum aufgenommenen Magnetspule gegenüber dem sie umgebenden Grundkörper lässt sich insbesondere auch dadurch weiter verbessern, dass die Aufnahme und/oder die Deckscheibe und/oder der Spulenträger aus einem elektrisch isolierenden Material gebildet ist.

Als vorteilhaft hat es sich auch gezeigt, wenn am Rand der ersten Deckscheibe mehrere Einkerbungen ausgebildet sind, da hierdurch die Führung der Endabschnitte der Spulenwicklung noch weiter verbessert wird. In diesem Zusammenhang hat es sich dann noch weiter als vorteilhaft erwiesen, wenn genau drei Einkerbungen ausgebildet sind. So kann eine der Einkerbungen dazu verwendet werden, bei der Spulenwicklung der Magnetspule einen der Endabschnitte, nämlich den Anfangsendabschnitt, darin zu führen, dann den Anfangsendabschnitt auf der ersten Deckscheibe zu fixieren und danach den Wicklungsvorgang zu starten.

Als besonders günstig hat es sich auch erwiesen, wenn die Magnetspule in dem Aufnahmeraum durch eine elektrisch isolierende Vergussmasse vergossen ist. Neben einer verbesserten Isolation wird hierdurch auch die Lage der Magnetspule in dem Aufnahmeraum gesichert, was sich positiv auf die Lebensdauer des Magnetfußes auswirkt.

Die die Elektrowerkzeugmaschine betreffende Aufgabe wird gelöst durch eine Elektrowerkzeugmaschine mit einem Magnetfuß nach einem der Ansprüche 1 bis 12.

Gegenstand dieser Offenbarung ist auch ein verbessertes Herstellungsverfahren für einen Magnetfuß, das die folgenden Schritte umfasst:
- Aufbringen einer Spulenwicklung auf einem Spulenträger zur Bildung einer Magnetspule,
- Zusammenfügen jeweils eines Endabschnitts der Spulenwicklung und eines Anschlusskabels in einer mechanischen Anschlusshilfe, die bevorzugt als ein Crimpverbinder gebildet ist,
- Bilden einer Einheit aus dem Endabschnitt der Spulenwicklung, dem Anschlusskabel und dem Crimpverbinder durch Deformieren der Anschlusshilfe,
- Einsetzen der den Endabschnitt der Spulenwicklung, das Anschlusskabel und die deformierte Anschlusshilfe umfassenden Einheiten in eine Aufnahme, die an dem Spulenträger ausgebildet ist,
- Einsetzen der Magnetspule in einen Grundkörper des Magnetfußes, und
- Vergießen der Magnetspule in dem Grundkörper durch eine Vergussmasse. Hierdurch wird ein besonders einfaches Herstellungsverfahren für einen Magnetfuß bereitgestellt, wobei es im Rahmen der Erfindung auch vorgesehen ist, dass mehrere Magnetspulen verwendet werden, die
vorzugsweise jeweils in einem eigenen Aufnahmeraum in dem Grundkörper des Magnetfußes aufgenommen sind.

Im Folgenden wird die Erfindung an einem in den Zeichnungen dargestellten Ausführungsbeispiel näher erläutert; es zeigen:
- Fig. 1: eine perspektivische Ansicht eines Magnetfußes, der an einer Elektrowerkzeugmaschine befestigt ist,
- Fig. 2: einen Längsschnitt durch eine erste Ausführungsform eines Magnetfußes,
- Fig. 3: eine perspektivische Ansicht einer Magnetspule des Magnetfußes,
- Fig. 4: eine Ansicht eines Details aus der Figur 3,
- Fig. 5: eine Schnittansicht durch die Magnetspule aus der Figur 3,
- Fig. 6: eine perspektivische Ansicht eines Spulenträgers, und
- Fig. 7: eine Explosionsansicht der Magnetspule.

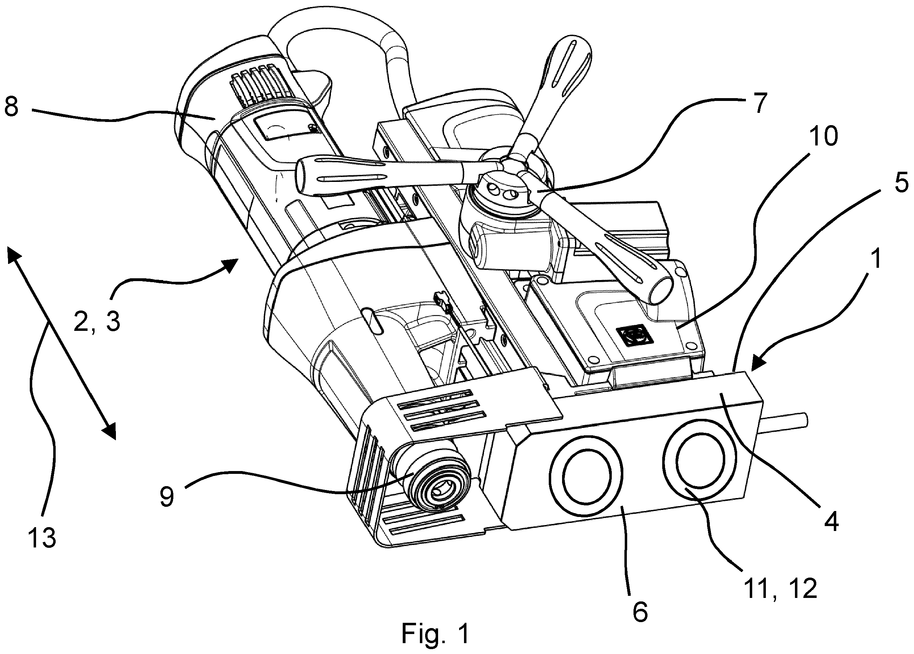

Figur 1 zeigt in einer perspektivischen Ansicht einen Magnetfuß 1, der an einer Elektrowerkzeugmaschine 2, im vorliegenden Beispiel an einer Magnetkernbohrmaschine 3, befestigt ist. Der Magnetfuß 1 weist dabei einen Grundkörper 4 mit einer ersten Seite 5 auf, die mit der Elektrowerkzeugmaschine 2 gekoppelt ist, und mit einer gegenüberliegenden zweiten Seite 6, die auf ein zu bearbeitendes Werkstück aufsetzbar ist.

Durch einen von Hand bedienbaren Verstellmechanismus 7 kann ein Antriebsmotor 8, mit dem eine Werkzeugaufnahme 9 drehfest gekoppelt ist, gegenüber dem Magnetfuß 1 und einer damit verbundenen Elektronikeinheit 10 verstellt werden, wie mit dem Pfeil 13 angedeutet ist. Zur Befestigung der Elektrowerkzeugmaschine 2 auf einem Werkstück wird diese mit der zweiten Seite 6 des Magnetfußes 1 auf ein magnetisierbares Werkstück gestellt und der Magnetfuß 1 eingeschaltet. Hierzu sind in dem Grundkörper 4 des Magnetfußes 1 Magnetspulen 11 angeordnet, die jeweils einen Elektromagneten 12 bilden, wie nachstehend noch weiter erläutert wird.

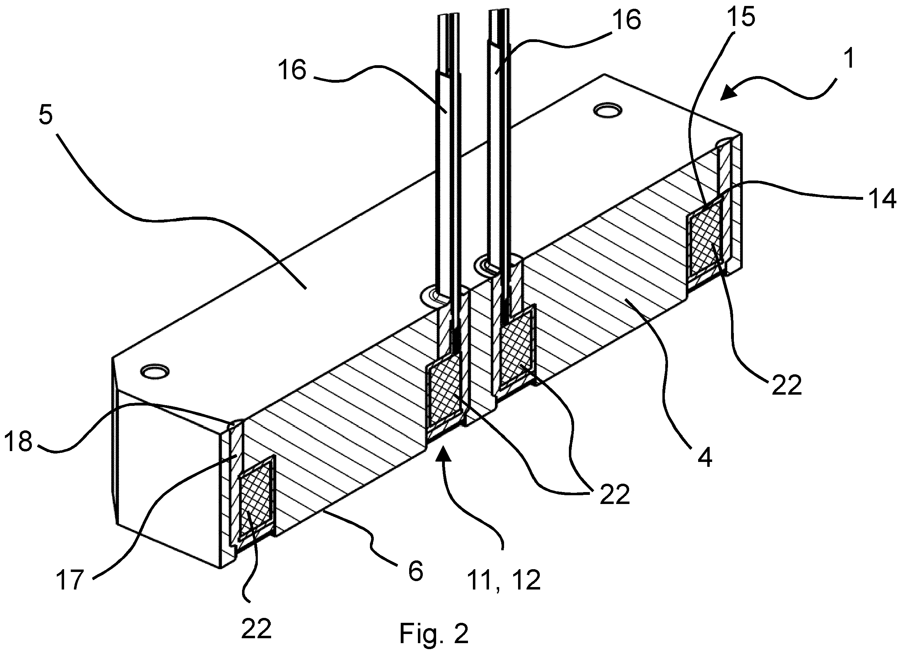

Figur 2 zeigt den Aufbau des Magnetfußes 1 in einer Schnittansicht entlang eines Längsschnitts. Wie der Figur 2 zu entnehmen ist, weist der Magnetfuß 1 einen Grundkörper 4 auf, in dem in Aufnahmeräumen 14 zwei Magnetspulen 11 aufgenommen sind, die die Elektromagneten 12 des Magnetfußes 1 bilden. Die Spulenwicklungen 22 der Magnetspulen 11 sind jeweils auf einem Spulenträger 15 gewickelt, der in dem Aufnahmeraum 14 aufgenommen ist, der in dem Grundkörper 4 ausgebildet ist. Die Magnetspulen 11 sind dabei mit der Elektrowerkzeugmaschine 2 durch Anschlusskabel 16 elektrisch leitend verbunden. Hierdurch ist es dem Nutzer möglich, die Magnetspulen 11 anzusteuern und dadurch die Magnetkraft der Elektromagnete 12 zwischen einer maximalen resultierenden Haltekraft und einer minimalen resultierenden Haltekraft zu schalten. Die Magnetspulen 11 sind dabei in den jeweiligen Aufnahmeräumen 14 durch eine elektrisch isolierende Vergussmasse 17 vergossen, um eine zusätzliche Isolierung der Magnetspulen 11 gegenüber dem Grundkörper 4 zu erreichen. Zum Zuführen der Vergussmasse 17 sind in dem Grundkörper 4 Zuleitungskanäle 18 ausgebildet, in die die Vergussmasse 17 eingeführt werden kann und die in den Aufnahmeräumen 14 münden.

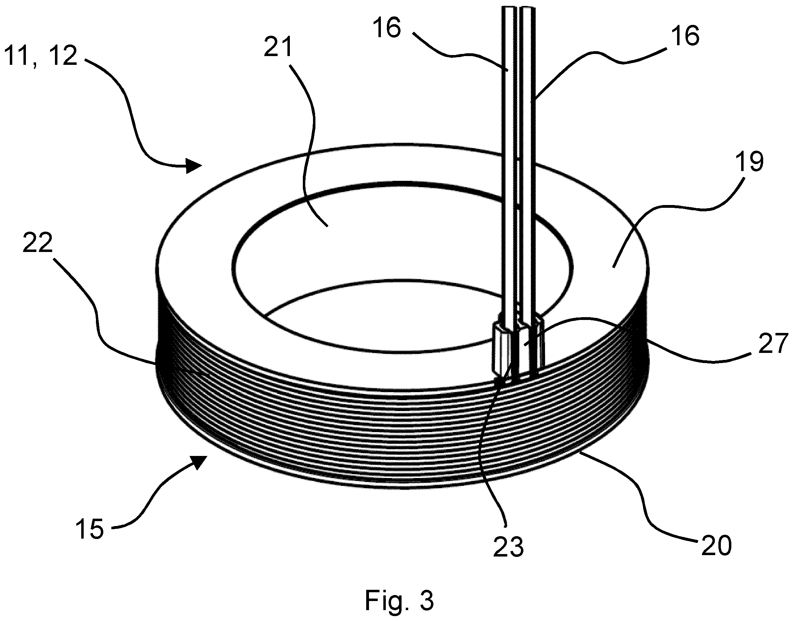

Der Aufbau der Magnetspule 11 wird insbesondere aus der in der Figur 3 dargestellten Perspektivansicht deutlich. So ist erkennbar, dass der Spulenträger 15 eine erste Deckscheibe 19, die der ersten Seite 5 des Grundkörpers 4 zugewandt ist, und eine zweite Deckscheibe 20 aufweist, die der zweiten Seite 6 des Grundkörpers 4 zugewandt ist. Die erste Deckscheibe 19 und die zweite Deckscheibe 20 sind über einen zylindrischen Abschnitt 21 miteinander verbunden, auf dem die Spulenwicklung 22 der Magnetspule 11 gewickelt ist.

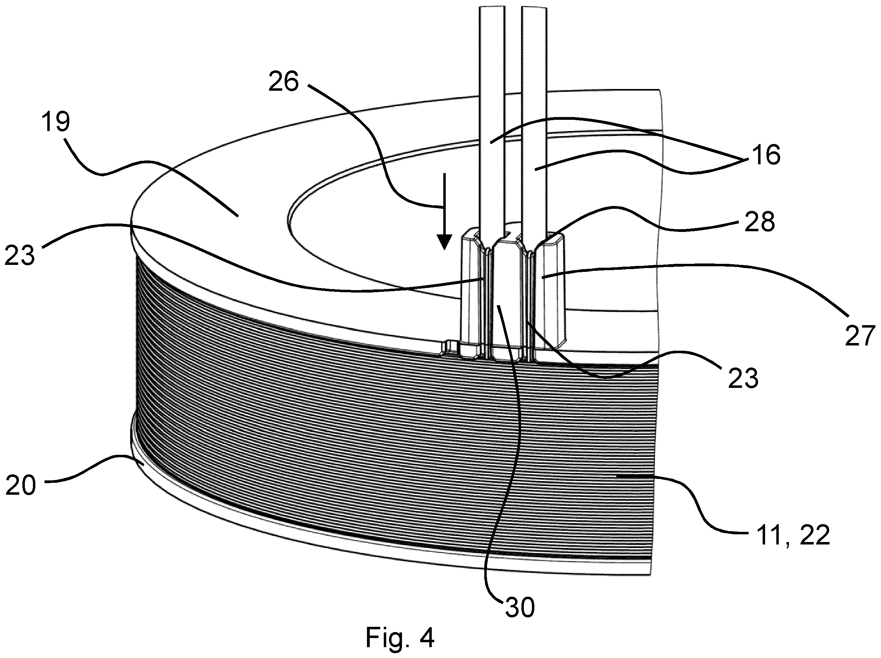

Wie insbesondere der in der Figur 4 dargestellten Detailansicht entnommen werden kann, weist die Spulenwicklung 22 der Magnetspule 11 zwei Endabschnitte 23 auf, die jeweils mit einem der Anschlusskabel 16 verbunden sind, die zur elektrischen Kontaktierung der Magnetspule 11 mit der Elektrowerkzeugmaschine 2 dienen. Diese Endabschnitte 23 der Spulenwicklung 22 sind jeweils durch eine mechanische Anschlusshilfe 24, die in dem gezeigten Ausführungsbeispiel als ein Crimpverbinder 25 und zwar als ein Spliceverbinder ausgebildet ist, mit den Anschlusskabeln 16 verbunden. Dabei werden das Anschlusskabel 16 und der Endabschnitt 23 der Spulenwicklung 22 in einer gemeinsamen Einschubrichtung 26 - also in Richtung des in der Figur 4 dargestellten Pfeils - in die Anschlusshilfe 24 geschoben, bevor der Crimpverbinder 25 mechanisch komprimiert und dadurch zu einer Einheit verbunden wird. Die durch den Crimpverbinder 25 zu einer Einheit verbundenen Endabschnitte 23 und Anschlusskabel 16 sind jeweils in einer Aufnahme 27 aufgenommen, die dem Spulenträger 15, und zwar der ersten Deckscheibe 19, zugeordnet ist und sich in Richtung der ersten Seite 5 des Grundkörpers 4 erstreckt.

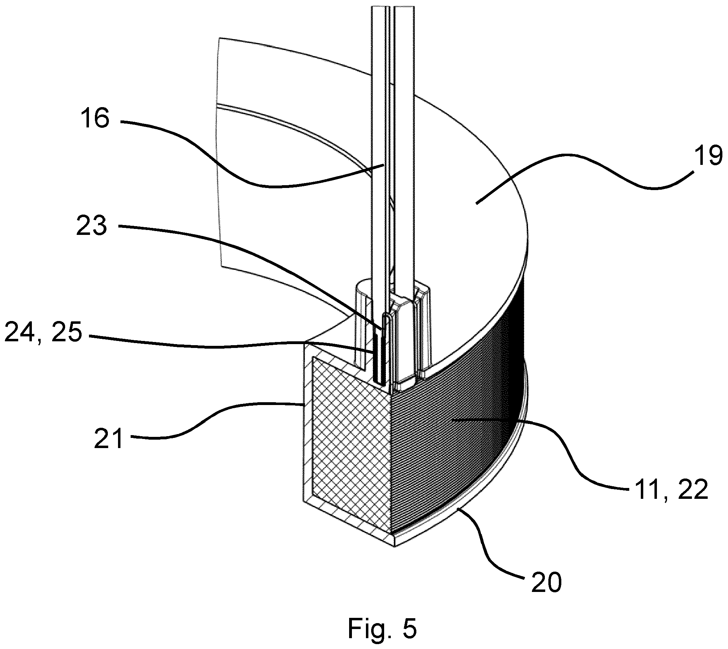

Figur 5 zeigt in einer Schnittansicht insbesondere die in der Aufnahme 27 aufgenommene Einheit aus Endabschnitt 23 der Spulenwicklung 22 und Anschlusskabel 16, die durch den Crimpverbinder 25 fest miteinander verbunden sind. Der Figur 5 ist außerdem noch zu entnehmen, dass die Aufnahme 27 einenends geschlossen ist, wodurch die Einsetztiefe der Anschlusshilfe 24 in die Aufnahme 27 beschränkt ist. Der Crimpverbinder 25 ist dabei so dimensioniert, dass dessen Länge kürzer ist als die Einsetztiefe der Aufnahme 27. Hierdurch wird sichergestellt, dass die in die Aufnahme 27 eingesetzte Einheit, die den Endabschnitt 23 der Spulenwicklung 22 und das Anschlusskabel 16 umfasst, so in der Aufnahme 27 aufgenommen ist, dass die Gefahr von Kurzschlüssen effektiv verhindert wird.

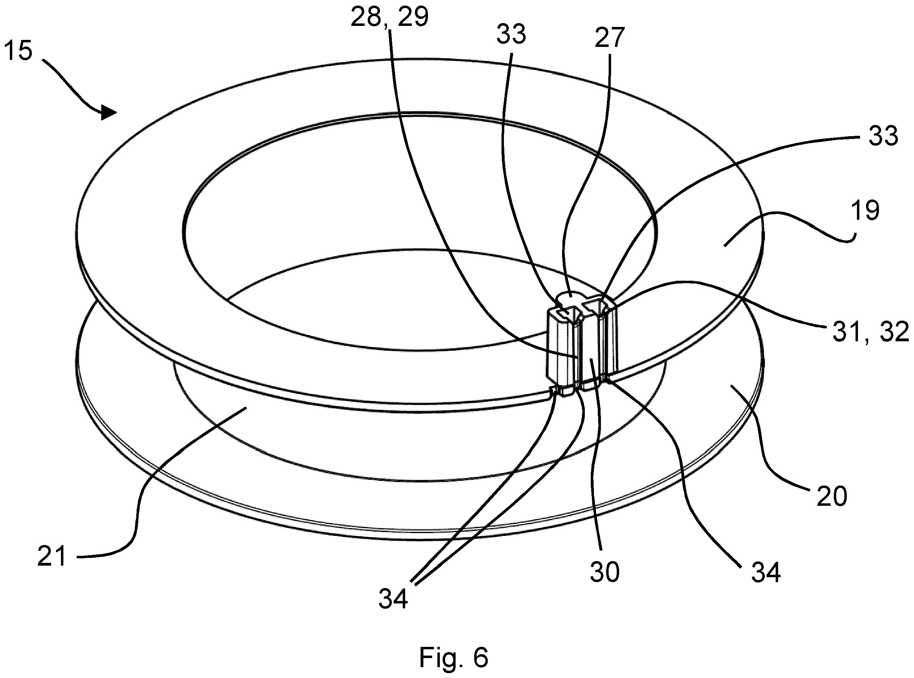

Figur 6 zeigt eine perspektivische Ansicht des Spulenträgers 15, der in dem gezeigten Ausführungsbeispiel aus einem elektrisch isolierenden Material, nämlich aus Kunststoff gebildet ist, der in dem gezeigten Ausführungsbeispiel hochwärmeleitend und elektrisch isolierend gebildet ist. Dieser Abbildung kann entnommen werden, dass an der Außenseite der Aufnahme 27 eine Drahtführung 28 ausgebildet ist, in der die Endabschnitte 23 der Spulenwicklung 22 geführt werden. Diese Drahtführung 28 umfasst dabei einen ersten Führungsabschnitt 29, der sich über eine Seitenfläche 30 der Aufnahme 27 erstreckt, und einen zweiten Führungsabschnitt 31, der an einer Stirnfläche 32 der Aufnahme 27 ausgebildet ist. Der erste Führungsabschnitt 29 ist dabei senkrecht zu dem zweiten Führungsabschnitt 31 ausgebildet. Insbesondere zeigt Figur 6 aber auch, dass die Aufnahme 27 zwei gegeneinander elektrisch isolierte Aufnahmekompartimente 33 umfasst, um die beiden Crimpverbinder 25 und damit auch die beiden Endabschnitte 23 innerhalb der Aufnahme 27 voneinander elektrisch zu isolieren. Am Rand der ersten Deckscheibe 19 sind drei Einkerbungen 34 ausgebildet, von denen zwei Einkerbungen 34 fluchtend mit den Drahtführungen 28 verlaufen. Die dritte Einkerbung 34, die in der Figur 6 ganz links dargestellt ist, dient dazu, beim Wicklungsprozess den Anfang des Endabschnitts 23 zu führen, der auf der ersten Deckscheibe 19 befestigt wird, beispielsweise in einer Haltevorrichtung oder mittels Klebestreifen.

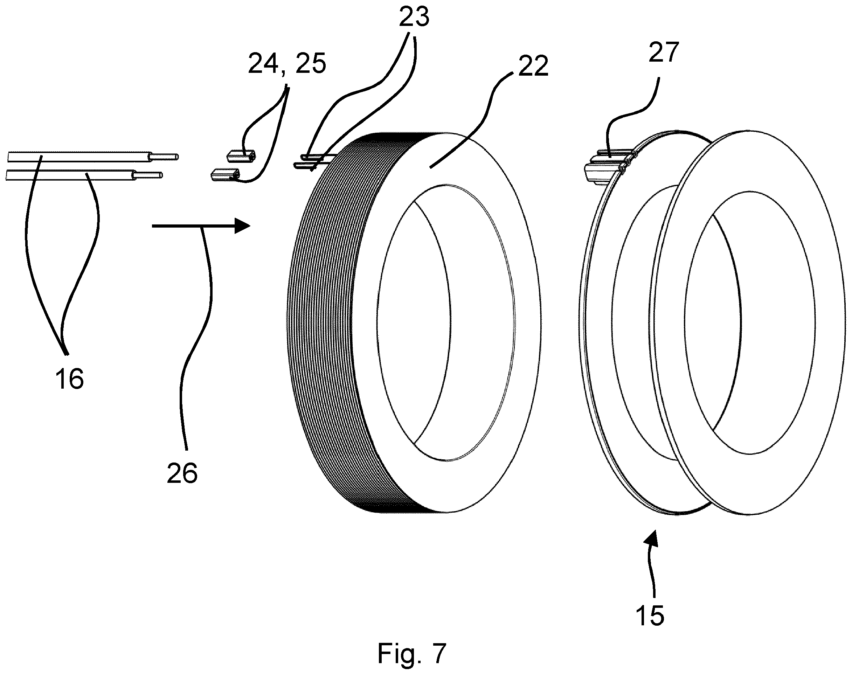

Figur 7 zeigt die Magnetspule 11 in einer Explosionsansicht. Aus dieser Ansicht wird noch einmal deutlich, dass die Endabschnitte 23 der Spulenwicklung 22, die von der Magnetspule 11 her kommen, so umgebogen werden, dass diese von der gleichen Richtung her in den Crimpverbinder 25 geführt werden können, wie die Anschlusskabel 16.

### Bezugszeichenliste

- 1: Magnetfuß
- 2: Elektrowerkzeugmaschine
- 3: Magnetkernbohrmaschine
- 4: Grundkörper
- 5: erste Seite
- 6: zweite Seite
- 7: Verstellmechanismus
- 8: Antriebsmotor
- 9: Werkzeugaufnahme
- 10: Elektronikeinheit
- 11: Magnetspule
- 12: Elektromagnet
- 13: Pfeil
- 14: Aufnahmeraum
- 15: Spulenträger
- 16: Anschlusskabel
- 17: Vergussmasse
- 18: Zuleitungskanal
- 19: erste Deckscheibe
- 20: zweite Deckscheibe
- 21: zylindrischer Abschnitt
- 22: Spulenwicklung
- 23: Endabschnitt
- 24: Anschlusshilfe
- 25: Crimpverbinder
- 26: Einschubrichtung
- 27: Aufnahme
- 28: Drahtführung
- 29: erster Führungsabschnitt
- 30: Seitenfläche
- 31: zweiter Führungsabschnitt
- 32: Stirnfläche
- 33: Aufnahmekompartiment
- 34: Einkerbung

## Patentansprüche

1. Magnetfuß (1) für eine Elektrowerkzeugmaschine (2), insbesondere für eine Magnetkernbohrmaschine (3), mit einem Grundkörper (4), in dem in einem Aufnahmeraum (14) mindestens eine einen Elektromagneten (12) bildende erste Magnetspule (11) aufgenommen ist, deren Spulenwicklung (22) auf einem Spulenträger (15) gewickelt ist und deren Magnetkraft zwischen einer maximalen resultierenden Haltekraft und einer minimalen resultierenden Haltekraft schaltbar ist, wobei die Spulenwicklung (22) der Magnetspule (11) zwei Endabschnitte (23) aufweist, die jeweils mit einem Anschlusskabel (16) verbunden sind, die zur elektrischen Kontaktierung der Magnetspule (11) mit der Elektrowerkzeugmaschine (2) dienen, und wobei der Grundkörper (4) eine erste Seite (5), die mit der Elektrowerkzeugmaschine (2) koppelbar ist, und eine gegenüberliegende zweite Seite (6) aufweist, die auf ein zu bearbeitendes Werkstück aufsetzbar ist, **dadurch gekennzeichnet, dass** die Endabschnitte (23) der Spulenwicklung (22) jeweils durch eine mechanische Anschlusshilfe (24) mit den Anschlusskabeln (16) verbunden sind, und dass dem Spulenträger (15) eine Aufnahme (27) für die Anschlusshilfen (24) zugeordnet ist, die sich in Richtung der ersten Seite (5) des Grundkörpers (4) erstreckt.

2. Magnetfuß (1) nach Anspruch 1, **dadurch gekennzeichnet, dass** die Anschlusshilfe (24) ausgewählt ist aus einer Gruppe, die Crimpverbinder (25), insbesondere Spliceverbinder und Aderendhülsen, sowie Parallelverbinder umfasst.

3. Magnetfuß (1) nach Anspruch 1 oder 2, **dadurch gekennzeichnet, dass** das Anschlusskabel (16) und der Endabschnitt (23) der Spulenwicklung (22) eine gemeinsame Einschubrichtung (26) in die Anschlusshilfe (24) aufweisen.

4. Magnetfuß (1) nach Anspruch 1, **dadurch gekennzeichnet, dass** die Aufnahme (27) zwei gegeneinander elektrisch isolierte Aufnahmekompartimente (33) umfasst.

5. Magnetfuß (1) nach einem der vorangehenden Ansprüche, **dadurch gekennzeichnet, dass** die Länge der Anschlusshilfen (24) kürzer ist als die Einsetztiefe der Aufnahme (27).

6. Magnetfuß (1) nach einem der vorangehenden Ansprüche, **dadurch gekennzeichnet, dass** an der Außenseite der Aufnahme (27) eine Drahtführung (28) ausgebildet ist.

7. Magnetfuß (1) nach Anspruch 6, **dadurch gekennzeichnet, dass** die Drahtführung (28) einen ersten Führungsabschnitt (29), der sich über eine Seitenfläche (30) der Aufnahme (27) erstreckt, und einen zweiten Führungsabschnitt (31) umfasst, der an einer Stirnfläche (32) der Aufnahme (27) ausgebildet ist.

8. Magnetfuß (1) nach einem der Ansprüche 1 bis 7, **dadurch gekennzeichnet, dass** der Spulenträger (15) eine erste Deckscheibe (19), die der ersten Seite (5) des Grundkörpers (4) zugewandt ist, und eine zweite Deckscheibe (20) aufweist, die der zweiten Seite (6) des Grundkörpers (4) zugewandt ist, wobei die erste Deckscheibe (19) und die zweite Deckscheibe (20) über einen zylindrischen Abschnitt (21) miteinander verbunden sind, auf dem die Spulenwicklung (22) der Magnetspule (11) gewickelt ist.

9. Magnetfuß (1) nach Anspruch 8, **dadurch gekennzeichnet, dass** die Aufnahme (27) der ersten Deckscheibe (19) zugeordnet ist, die benachbart zu der ersten Seite (5) des Grundkörpers (4) angeordnet ist.

10. Magnetfuß (1) nach einem der Ansprüche 1 bis 9, **dadurch gekennzeichnet, dass** die Aufnahme (27) und/oder die Deckscheibe (19, 20) und/oder der Spulenträger (15) aus einem elektrisch isolierenden Material gebildet ist.

11. Magnetfuß (1) nach einem der Ansprüche 8 bis 10, **dadurch gekennzeichnet, dass** am Rand der ersten Deckscheibe (19) mehrere Einkerbungen (34) ausgebildet sind, wobei besonders bevorzugt genau drei Einkerbungen (34) ausgebildet sind.

12. Magnetfuß (1) nach einem der Ansprüche 1 bis 11, **dadurch gekennzeichnet, dass** die Magnetspulen (11) in dem Aufnahmeraum (14) durch eine elektrisch isolierende Vergussmasse (17) vergossen sind.

13. Elektrowerkzeugmaschine (2) mit einem Magnetfuß (1) nach einem der Ansprüche 1 bis 12.

## Claims

1. Magnet base (1) for a power tool machine (2), in particular for a magnetic core drilling machine (3), having a base body (4) in which at least one first solenoid coil (11) forming an electromagnet (12) is accommodated in a receiving space (14), the coil winding (22) of which is wound on a coil carrier (15) and the magnetic force of which can be switched between a maximum resultant holding force and a minimum resultant holding force, the coil winding (22) of the solenoid coil (11) having two end sections (23) which are each connected to a connection cable (16) which serve to make electrical contact between the solenoid coil (11) and the power tool machine (2), and the base body (4) having a first side (5), which can be coupled to the power tool (2), and an opposite second side (6), which can be placed on a workpiece to be machined, **characterized in that** the end sections (23) of the coil winding (22) are each connected to the connection cables (16) by a mechanical connection aid (24), and **in that** the coil carrier (15) is assigned a receptacle (27) for the connection aids (24), which extends in the direction of the first side (5) of the base body (4).

2. Magnet base (1) according to claim 1, **characterized in that** the connection aid (24) is selected from a group comprising crimp connectors (25), in particular splice connectors and wire end ferrules, and parallel connectors.

3. Magnet base (1) according to claim 1 or 2, **characterized in that** the connection cable (16) and the end section (23) of the coil winding (22) have a common insertion direction (26) into the connection aid (24).

4. Magnet base (1) according to claim 1, **characterized in that** the receptacle (27) comprises two mutually electrically insulated receptacle compartments (33).

5. Magnet base (1) according to one of the preceding claims, **characterized in that** the length of the connection aids (24) is shorter than the insertion depth of the receptacle (27).

6. Magnet base (1) according to one of the preceding claims, **characterized in that** a wire guide (28) is formed on the outside of the receptacle (27).

7. Magnet base (1) according to claim 6, **characterized in that** the wire guide (28) comprises a first guide portion (29) extending over a side surface (30) of the receptacle (27) and a second guide portion (31) formed on an end surface (32) of the receptacle (27).

8. Magnet base (1) according to any one of claims 1 to 7, **characterized in that** the coil carrier (15) has a first cover disc (19) facing the first side (5) of the base body (4) and a second cover disc (20) facing the second side (6) of the base body (4), the first cover disc (19) and the second cover disc (20) being connected to one another via a cylindrical section (21) on which the coil winding (22) of the solenoid coil (11) is wound.

9. Magnet base (1) according to claim 8, **characterized in that** the receptacle (27) is assigned to the first cover disc (19), which is arranged adjacent to the first side (5) of the base body (4).

10. Magnet base (1) according to one of claims 1 to 9, **characterized in that** the receptacle (27) and/or the cover disk (19, 20) and/or the coil carrier (15) is formed of an electrically insulating material.

11. Magnet base (1) according to one of claims 8 to 10, **characterized in that** a plurality of indentations (34) are formed on the edge of the first cover disc (19), wherein particularly preferably exactly three indentations (34) are formed.

12. Magnet base (1) according to one of claims 1 to 11, **characterized in that** the solenoid coils (11) are cast in the receiving space (14) by an electrically insulating casting compound (17).

13. Power tool machine (2) with a magnet base (1) according to one of claims 1 to 12.

## Revendications

1. Pied magnétique (1) pour une machine-outil électrique (2), en particulier pour une perceuse à noyau magnétique (3), avec un corps de base (4), dans lequel au moins une première bobine magnétique (11) formant un électroaimant (12), dont l'enroulement de bobine (22) est enroulé sur un support de bobine (15) et dont la force magnétique peut être commutée entre une force de retenue résultante maximale et une force de retenue résultante minimale, est reçue dans un espace de réception (14), dans lequel l'enroulement de bobine (22) de la bobine magnétique (11) présente deux parties d'extrémité (23), qui sont reliées chacune à un câble de raccordement (16), qui servent à la mise en contact électrique de la bobine magnétique (11) avec la machine-outil électrique (2), et dans lequel le corps de base (4) présente un premier côté (5), qui peut être couplé à la machine-outil électrique (2), et un deuxième côté (6) opposé, qui peut être posé sur une pièce à usiner, **caractérisé en ce que** les parties d'extrémité (23) de l'enroulement de bobine (22) sont reliées chacune par un auxiliaire de raccordement (24) mécanique aux câbles de raccordement (16), et qu'un logement (27) pour les auxiliaires de raccordement (24), qui s'étend en direction du premier côté (5) du corps de base (4), est associé au support de bobine (15).

2. Pied magnétique (1) selon la revendication 1, **caractérisé en ce que** l'auxiliaire de raccordement (24) est choisi dans un groupe qui comprend des connecteurs à sertir (25), en particulier des connecteurs bout-à-bout et des cosses d'extrémité de fil, ainsi que des connecteurs parallèles.

3. Pied magnétique (1) selon la revendication 1 ou 2, **caractérisé en ce que** le câble de raccordement (16) et la partie d'extrémité (23) de l'enroulement de bobine (22) présentent une direction d'insertion (26) commune dans l'auxiliaire de raccordement (24).

4. Pied magnétique (1) selon la revendication 1, **caractérisé en ce que** le logement (27) comprend deux compartiments de réception (33) isolés électriquement l'un par rapport à l'autre.

5. Pied magnétique (1) selon l'une quelconque des revendications précédentes, **caractérisé en ce que** la longueur des auxiliaires de raccordement (24) est plus courte que la profondeur d'insertion du logement (27).

6. Pied magnétique (1) selon l'une quelconque des revendications précédentes, **caractérisé en ce qu'**un guide-fil (28) est réalisé sur le côté extérieur du logement (27).

7. Pied magnétique (1) selon la revendication 6, **caractérisé en ce que** le guide-fil (28) comprend une première partie de guidage (29), qui s'étend sur toute une surface latérale (30) du logement (27), et une deuxième partie de guidage (31), qui est réalisée sur une surface frontale (32) du logement (27) .

8. Pied magnétique (1) selon l'une quelconque des revendications 1 à 7, **caractérisé en ce que** le support de bobine (15) présente un premier disque de recouvrement (19), qui est tourné vers le premier côté (5) du corps de base (4), et un deuxième disque de recouvrement (20), qui est tourné vers le deuxième côté (6) du corps de base (4), dans lequel le premier disque de recouvrement (19) et le deuxième disque de recouvrement (20) sont reliés l'un à l'autre par l'intermédiaire d'une partie cylindrique (21), sur laquelle l'enroulement de bobine (22) de la bobine magnétique (11) est enroulé.

9. Pied magnétique (1) selon la revendication 8, **caractérisé en ce que** le logement (27) est associé au premier disque de recouvrement (19), qui est disposé de manière adjacente au premier côté (5) du corps de base (4).

10. Pied magnétique (1) selon l'une quelconque des revendications 1 à 9, **caractérisé en ce que** le logement (27) et/ou le disque de recouvrement (19, 20) et/ou le support de bobine (15) sont formés à partir d'un matériau électriquement isolant.

11. Pied magnétique (1) selon l'une quelconque des revendications 8 à 10, **caractérisé en ce que** plusieurs encoches (34) sont réalisées sur le bord du premier disque de recouvrement (19), dans lequel de manière particulièrement préférée exactement trois encoches (34) sont réalisées.

12. Pied magnétique (1) selon l'une quelconque des revendications 1 à 11, **caractérisé en ce que** les bobines magnétiques (11) sont enrobées dans l'espace de réception (14) par un matériau d'enrobage (17) électriquement isolant.

13. Machine-outil électrique (2) avec un pied magnétique (1) selon l'une quelconque des revendications 1 à 12.
